Europäisches Patentamt

European Patent Office

Office européen des brevets

(11) Publication number: **0 450 393 A2**

# EUROPEAN PATENT APPLICATION

(21) Application number: 91104236.4

(22) Date of filing: **19.03.91**

(51) Int. Cl.⁵: **C01B 33/027**, B01J 8/26

(30) Priority: **02.04.90 US 502917**

(43) Date of publication of application:
**09.10.91 Bulletin 91/41**

(84) Designated Contracting States:
**DE FR IT**

(71) Applicant: **ETHYL CORPORATION**
**Ethyl Tower 451 Florida Boulevard**
**Baton Rouge Louisiana 70801(US)**

(72) Inventor: **Allen, Robert Hall**
**5841 Tarrytown Avenue**
**Baton Rouge, Louisiana 70 808(US)**

(74) Representative: **Schwabe - Sandmair - Marx**
**Stuntzstrasse 16**
**W-8000 München 80(DE)**

(54) **Improved polysilicon and process therefor.**

(57) Semiconductor grade polysilicon in the form of free flowing, approximately spherical particles produced in a fluidized bed, and having a reduced surface silicon dust content and hydrogen content. Such products are formed in two operations utilizing fluidized beds. In the first operation, silicon is deposited on polysilicon seed particles. In the second operation, trichlorosilane or other halogenated silane is decomposed at an elevated temperature to provide a thin silicon coat, which binds the silicon fines to the larger particles. While the particles are exposed to the decomposition temperature employed, hydrogen diffuses out of the particles resulting in a reduction in hydrogen content and producing a polysilicon particle with a smooth shiny surface.

This invention relates to an improved polysilicon product and processes for the making thereof. It has been discovered that an improved product can be made by a process which contemporaneously reduces the hydrogen content and the surface silicon dust content of a product while producing a product with a glossier (e.g., shinier) smoother surface.

Processes to produce polysilicon in a fluidized bed are known. See U.S. Patent Nos. 4,784,840 and 4,820,587. The polysilicon particles produced by these processes are bead-like products useful in continuous melt replenishment systems used in producing monocrystalline silicon which are employed in semiconductor device production.

Two negative aspects heretofore were present in the production of polysilicon particles. One aspect is the existence of polysilicon dust on the particles, such dust being subjectively detectable on handling (e.g., such as dust clouds) and visual microscopic identification as well as objectively detectable by sonication measuring methods. The second aspect is the presence of hydrogen in the polysilicon particles, which can create handling problems during the melting process.

Improvements are still desirable in the processes to produce polysilicon particles and in the particles themselves, particularly as concerns dust and hydrogen presence on and in the particles.

This invention relates to improved polysilicon suitable for use as a starting material for the production of semiconductor devices. This invention also relates to a process for producing the improved polysilicon.

The polysilicon product of this invention is produced in two fluidized bed operations. The first operation comprises the chemical vapor deposition of silicon on silicon seed particles to produce a center portion of high purity silicon. The deposition is accomplished by the thermal decomposition of silane. For a description of the aforementioned process for production of polysilicon, reference is made to U.S. Patents 4,820,587 and 4,784,840.

The second operation comprises production of a thin outer layer of silicon on the center portion by the thermal decomposition of a halogenated silane, such as trichlorosilane, at a predetermined temperature and for a predetermined period of time such that the hydrogen content of the polysilicon is also reduced. In a preferred embodiment, the two decompositions (i.e., of silane and halogenated silane) occur in two separate fluidized bed reactors. However, this invention is not limited to the use of dual fluidized bed reactors since single fluidized bed reactor as well as single or dual moving bed reactors can also be used.

For the purpose of description of this invention, the first operation described above is termed a productivity mode. This mode comprises deposition of substantially all of the silicon which is to be deposited on the particles. This mode is preferably conducted under high productivity conditions, such as that, for example, described in U.S. 4,820,587 or 4,784,840 (e.g., using decomposition gas containing 10 to 100 mole percent silane and a process temperature of preferably 620-750°C. These conditions result in formation of a product which has surface imperfections and silicon dust or fines deposited on product particle surfaces. The product particles also contain considerable hydrogen.

The second operation described above is termed an enhancement mode. This mode comprises deposition of a thin silicon outer layer on the center portion of high purity silicon. This layer glues, i.e., binds or cements, surface silicon dust to the product particles and is of higher density than the underlying polysilicon. This dense outer layer is deposited using a much higher process temperature than that employed in the productivity mode. The high temperature employed facilitates diffusion of hydrogen out of the product particles. Hence, this second mode enhances the quality of the product produced in the first mode -- i.e., the surface silicon dust content, and the particle hydrogen content are both reduced. Additionally, the dense outer layer reduces the surface area exposed to contamination by covering or filling microscopic imperfections in the surface of the underlying polysilicon thereby resulting in a product particle with a shiny smooth surface.

The products of this invention are free-flowing materials which are readily handleable and transportable, and suitable for advanced Czochralski pulling processes in the production of semiconductor devices. Advanced Czochralski pulling processes include continuous melt replenishment, enhanced charge, and recharge processes. Enhanced charge is a two step melting process wherein a batch of polysilicon is melted and additional polysilicon is added to the molten silicon to achieve a larger batch of molten silicon from which a larger semiconductor crystal is pulled. Recharge is adding polysilicon to a crucible with a heel left after a crystal has been pulled.

It is to be understood that the presence of a small quantity of non-free flowing particles does not preclude a product from being within the scope of this invention. So long as substantially all the particles are free flowing, the material is within this invention. Hence, this invention relates to compositions which are substantially (e.g., predominantly) in the form of free flowing particles, preferably approximately spherical particles. Of course, materials which consist entirely of free flowing particles are preferred, since they have lesser propensity to cause pluggage in processing systems. If desired, non-free flowing particles can be removed prior to use by suitable means.

As an example of the product and process of this invention, the first operation can comprise growing a seed particle from an average size of 200 microns to an average size of 900 microns. In the second operation, an outer layer of 2 microns of silicon is added to the center portion of 900 microns thereby increasing the average particle size to 904 microns. In this example, 98.6% of the growth results from the first operation, and 1.4% of the growth results from the second operation.

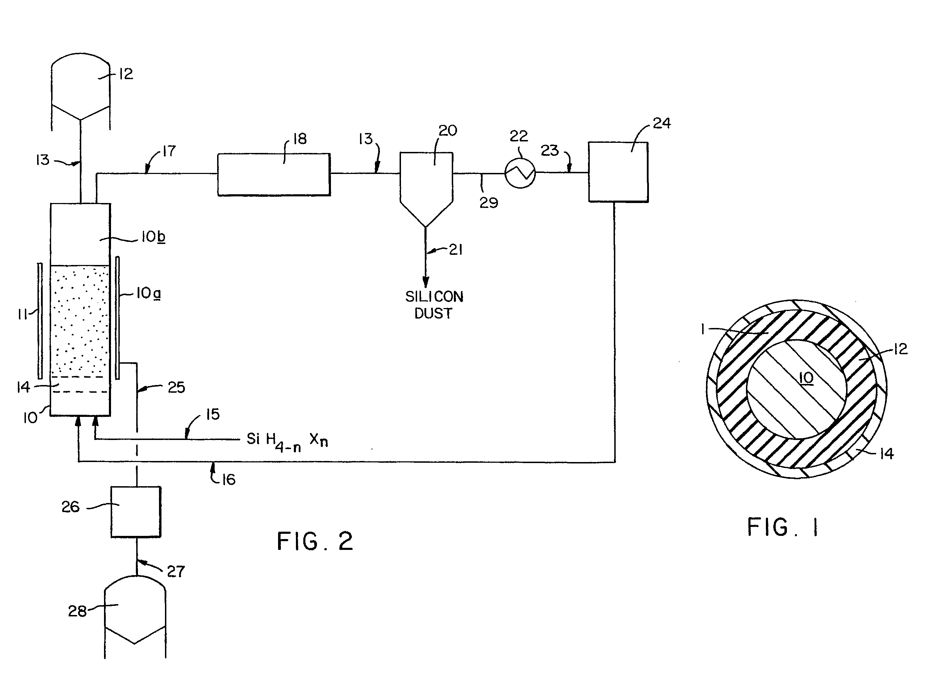

The drawing in Figure 1 is a cross-sectional representation, not to scale, of an illustrative particle of this invention.

Figure 2 is a schematic representation which is not to scale. It shows the use of a second fluidized bed for the enhancement mode described herein.

Figures 3, 4 and 5 are photomicrographs illustrating the surface characteristics of polysilicon particles produced by different processes.

In an important aspect, this invention relates to high quality, semiconductor grade polysilicon particles produced by fluidized bed processing. The particulate product of this invention contains a low amount of hydrogen and a low amount of surface silicon dust. Thus, this invention provides as a new composition of matter, semiconductor-grade, silane-derived polysilicon in bead or bead-like particulate form having a hydrogen content of less than 30 parts per million atomic (ppma) and a surface essentially free of silicon dust, said polysilicon having a center portion of high purity silicon, and an outer layer of a dense silicon covering the center portion. Such dense outer layer can appear as a shiny surface. The outer layer of dense silicon is derived from the decomposition of a halogenated silane.

In the form depicted in Figure 1, there is represented an illustrative particle of this invention. The particle is comprised of a core or seed particle 10, a layer 12 of silane derived polysilicon deposited from the production mode (core 10 and layer 12 comprising a center portion), and a dense silicon layer 14 on the center portion derived from the enhancement mode.

Accordingly, in a preferred embodiment of this invention, the polysilicon has a surface silicon dust content of less than 0.08 percent by weight and most preferably, less than 0.005 percent by weight. The center portion of the particulate polysilicon produced by the process of this invention has a size ranging from 80 to 2000 microns, and most preferably an average size ranging from 600 to 1000 microns. In another preferred embodiment, the dense outer layer of silicon on the center portion is from 0.1 to 5 microns in thickness and more preferably from 1 to 2 microns thick.

Besides providing new materials, this invention also provides a new process for the enhancement of silane derived polysilicon so as to provide a suitable material for the production of electronic, e.g., semiconductor, devices.

The process of this invention comprises a method of improving polysilicon produced in a fluidized bed whereby silicon from the decomposition of silane is deposited on seed particles. These silane derived polysilicon particles have a hydrogen content of 200 to 1200 ppma and a surface dust content of 0.08 to 0.5 weight percent. The process of this invention comprises a step which reduces the surface silicon dust content, and the hydrogen content of silane-derived polysilicon. By use of the method of this invention, a dense (e.g. reduced interstitial spaces and channels with resulting smoother appearing surface) layer of silicon (0.1 - 5.0 micron thick) is deposited on the center core to cement surface silicon dust to product particles while at the same time reducing the hydrogen content of the polysilicon to below about 30 ppma. Such dense outer layer can appear as a shiny surface. The deposition is conducted at a comparatively high temperature which causes hydrogen to diffuse out of the particles being treated. Thus, this invention provides a method for treating polysilicon having a hydrogen content and a surface silicon dust content to be reduced. This method comprises decomposing a halogenated silane in a fluidized bed of such particles, said bed being maintained at a temperature above the decomposition temperature of the halogenated silane but below the melting point of silicon, and recovering from the reaction zone in which the halogenated silane decomposition takes place a polysilicon product with both a reduced surface silicon dust content and hydrogen content. This treatment can produce a particle with an outer layer of silicon which has reduced permeability.

In the first operation or production mode, the silicon deposited on the seed particles can be several hundred microns thick. In contrast, the silicon layer deposited in the second operation or enhancement mode can be from 0.1 to 5 microns in thickness. A thicker layer than about 5 microns can be deposited in the second mode, but with decreasing benefit and increasing costs. For example, seed particles of 200 microns average size are grown to 850 microns average size in the production mode (a layer of about 325 microns). In the enhancement mode, a dense silicon layer of 2 microns is deposited on the center portion resulting in a particle with an average size of 854 microns.

The two operations utilize different deposition gases. In the first operation, silane is used as a source of silicon. Silane is not suitable for the second operation. The high temperature employed in the second operation precludes the use of silane, since silane decomposes at such temperatures to predominantly form objectionable dust or fines. Therefore in the second operation, a halogenated silane is used as the source of silicon which is deposited as the thin dense outer layer on the polysilicon particles. Preferred halogenated silanes are trichlorosilane and dichlorosilane.

In the first operation, the carrier gas is typically hydrogen containing 10-15 mole percent of silane. In the second operation, the carrier gas is hydrogen admixed with 0.5 to 1.0 mole percent of trichlorosilane. The carrier gas may also be an inert gas such as helium or argon; however, it is more desirable and less costly to use hydrogen as the carrier gas.

In another embodiment, this invention comprises a fluidized bed process for reducing the surface silicon dust content and hydrogen content of semiconductor grade polysilicon, said process comprising the steps of (a) fluidizing in a reaction zone, a bed of semiconductor grade, silane-derived polysilicon in bead or bead-like particulate form at a temperature in the range of $1000°$ to $1200°C$, with a carrier gas admixed with from 0.1 to 5.0 mole percent of a silane compound having the formula $SiH_{4-n}X_n$, wherein n is an integer of 1 to 4, and X is a halogen selected from the group consisting of chlorine, bromine and iodine, and (b) recovering from the reaction zone a semiconductor grade polysilicon product having a reduced surface silicon dust content and hydrogen content and having an outer layer of dense silicon on a center portion of high purity silicon. Preferably the polysilicon product has a shiny surface. It is preferred that the carrier gas be hydrogen. It is also preferred that the halogenated silane be trichlorosilane. The process can be performed to produce a polysilicon product having a surface dust content of less than about 0.005 weight percent, an average size ranging from 600 to 1000 microns, an outer layer of dense silicon from 0.1 to 5 microns in thickness, or combinations thereof.

It is in the second operation or enhancement mode that the product of the first operation is improved by cementing or covering silicon dust on the surface of the product particles produced in the first operation; the cementing being accomplished by deposition of a thin layer of silicon on the particles, the thin layer being obtained by thermal decomposition of a halogenated silane at a temperature which is sufficiently high enough to cause breakage of any residual silicon-hydrogen bonds and to cause hydrogen to diffuse from the particles, thereby reducing the hydrogen content and surface dust content of the particles. The second operation produces a polysilicon product with a shinier surface than particles produced by the first operation.

While the preferred carrier gas or fluidizing gas is hydrogen, other inert gas may also be used. Use of carrier gases such as argon or helium may result in a lower hydrogen content in the polysilicon product than when hydrogen is used. When using hydrogen as the fluidizing gas at atmospheric pressure, hydrogen content is typically in the range of 20 to 30 ppma. If an inert gas such as argon or helium is used at atmospheric pressure, the hydrogen content of the product particles may be lowered to 10 ppma or lower. However, it is less costly and hence more desirable to use hydrogen as the carrier gas.

As stated above, the process of this invention can be conducted using a polysilicon containing from 200 to 1200 ppma hydrogen and from 0.1 to 0.4 weight percent surface silicon dust. It is to be understood, however, that this invention can be applied to polysilicon containing a greater or lesser amount of hydrogen impurity and surface silicon dust. There is no real upper limit on the amount of hydrogen and surface silicon dust in the polysilicon to be improved.

In this invention, the polysilicon to be improved is heated at a temperature and for a time sufficient to reduce the hydrogen content of the particles being treated, and insufficient to melt consolidate (e.g. agglomerate) the particles by sintering. It has been discovered that process temperatures in the range of $1000°$ to $1200°C$ result in satisfactory diffusion rates and practical reactor sizes. More preferably the temperature is in the range of $1050°$ to $1150°C$. Higher temperatures greatly increase the sintering rate as the melting point of silicon is neared. Lower temperatures require less economical reaction times.

While the bed is maintained at the reaction temperature, a thin layer of silicon is deposited upon particles in the bed. The thin layer results from the thermal decomposition of the trichlorosilane or other halogenated silane. The layer of silicon deposited is generally from 0.1 to 5.0 microns thick.

The dehydrogenation of this invention proceeds well at atmospheric pressure; however, higher and lower pressures can be used if desired. In general, pressures higher than atmospheric retard the removal of volatile substances from the polysilicon particles being treated, and subatmospheric pressures facilitate the process. There is no real lower limit on the pressure employed, and an operator may select any subatmospheric pressure desired, e.g., down to one torr or lower.

To facilitate contact of the polysilicon particles with the vapor phase in order to promote diffusion of hydrogen from the particles, the particle bed is preferably maintained in motion during the dehydrogenation process. This also can reduce the tendency of particles to agglomerate at the temperatures employed.

Thus, one may use a moving bed or a fluidized bed apparatus. A preferred process utilizes a fluidized bed. Fluidized beds result in higher heat transfer rates between solid and fluid compared to other conventional modes of contact. Furthermore, the smooth flow of fluidized particles promotes ease of handling.

Referring now to Figure 2, reactor 10 is a fluidized bed apparatus for performing the enhancement mode containing a fluidized bed 10a of polysilicon seed particles, such as from a productivity mode operation. The reactor has free space 10b above the fluidized bed. The bed is heated to process temperature by a heat source (e.g., radiant heater) 11 which surrounds reactor 10. The bed of particles is maintained in a fluidized state by a stream of levitation gas which enters reactor 10 through lines 15 and 16. The levitation gas comprises a carrier gas, such as hydrogen, argon or helium and a minor amount of halogenated silane which serves as a silicon source. Lines 15 and 16 serve to introduce the halogenated silane and carrier gas respectively. The halogenated silane may be trichlorosilane or other similar material. The mole percent of halogenated silane in hydrogen is calculated to provide enough silicon (in the halogenated silane) to deposit a layer of 0.1 to 5 microns of silicon on the particles in the fluidized bed and more preferably a layer of 1 to 2 microns of silicon on the particles. The rate of flow of levitation gas is sufficient to maintain the polysilicon particles in fluidized motion.

The polysilicon particles in the fluidized bed are heated sufficient to maintain the particles at a temperature of from $1000°$ to $1200°$ C, i.e., a temperature above the thermal decomposition temperature of the halogenated silane, which is introduced into the fluidized bed (with the carrier gas) through the distributor.

After entering the reactor near the base thereof, the stream of levitation gas flows through distributor 14 into the particle bed. Distributor 14 has multiple orifices in order to distribute the flow of motive gas throughout the bed, and maintain the bed in fluidized suspension. Prior to entering the reactor, the motive gas can be heated by any suitable heating device (not shown). For example, the motive gas can be heated to a temperature of $325°$ C or above.

Exit gases leave the reactor through line 17 near the top thereof, and then flow through gas cooler 18 and line 19 into solids filter 20. Polysilicon dust which is entrained in the gas exit stream is removed by the solids filter 20. By-product solids (e.g., silicon dust) are removed from the filter through line 21. Effluent gas with solids removed is discharged through line 29 and into cooler 22 for further cooling. If desired, the effluent gas can be recycled (after purification in purification zone 24, if necessary), such as through line 16. Make-up feed to line 16 can also be added through additional means not shown.

After dehydrogenation and deposition of the silicon layer on the particles, the improved product is removed via line 25 to product cooler/collector 26 wherein the product is cooled to a suitable temperature for storage, e.g., $100°$ to $150°$ C. As required, improved product can be removed from the cooler/collector via line 27 into product hopper 28 for storage, use, or sale.

While the polysilicon particles are maintained in the fluidized bed, silicon-hydrogen bonds are broken and hydrogen diffuses from the particles to the fluid phase surrounding the particles. This diffusion reduces the hydrogen content of the particles being treated. While the hydrogen content is being reduced, a thin layer of silicon is deposited on the surface of the particles. The silicon layer is produced by the thermal decomposition of the halogenated silane admixed with the carrier gas. The silicon layer cements, i.e., glues or affixes, and covers surface silicon dust particles to the product particles in the bed, thereby reducing the surface silicon dust content of the particles and producing a dense impervious outer layer that resists contamination.

When silane is used as the deposition gas, it is preferred that it be admixed with hydrogen or other inert carrier gas, such as the gases of Group VIII of the Periodic Table. Generally speaking, the concentration of silane in the deposition gas is above about 10 mole percent, preferably in the range of 10 to 15 mole percent. When a halogenated silane is used as the deposition gas in the second operation, it is preferred that it also be admixed with a carrier gas, such as mentioned above. Accordingly, it is preferred that the concentration of halogenated silane be from 0.1 to 5 mole percent; more preferably from 0.2 to 2 mole percent.

For the second (i.e., enhancement) operation, it is preferred that trichlorosilane be used as the silicon source. However, other halogenated silanes, such as inorganic silicon halides selected from the group consisting of fluorides, bromides and iodides, can be used. These compounds have the formula $SiH_{4-n}X_n$, wherein n is an integer of 1 to 4 and X is a halogen selected from the group chlorine, bromine and iodine, as well as mixtures of such compounds. Specific examples thereof include silicon tetrachloride ($SiCl_4$), silicon tetrabromide ($SiBr_4$), silicon tetraiodide ($SiI_4$), triiodosilane ($SiHI_3$), dichlorosilane ($SiH_2Cl_2$), dibromosilane ($SiH_2Br_2$), chlorosilane ($SiH_3Cl$), bromosilane ($SiH_3Br$) and iodosilane ($SiH_3I$).

As indicated above, the enhancement mode of this invention is conducted for a time sufficient to reduce the hydrogen content of the polysilicon particles to a desired level, e.g., 30 ppma or less. Furthermore, the enhancement mode is conducted such that a thin layer of silicon is deposited in order to bind or cement silicon dust or fines to the polysilicon particles. For this bonding or uniting, the thin silicon coat can be less than 1 micron in thickness. Generally speaking, for this invention, 0.1 to 5.0 microns of additional silicon are deposited on the particle surface. More preferably, the thin layer has a thickness within the range of 1 to 2 microns.

In the enhancement mode, reaction times of 2 to 4 hours are required for batch operation. However, for continuous flow, backmixed operation, residence times of 8 to 12 hours are required to achieve less than 30 ppm hydrogen. Times outside this range can be employed to reduce hydrogen to a greater or lesser extent.

It is not necessary that the particles continuously be charged to the fluidized reactor 10 as the particles can be charged semi-continuously or batch-wise. For example, feed particles are charged to the reactor and enhanced particles removed from the reactor in a semi-continuous manner.

Using the above design bases, the process can reduce the hydrogen content of polysilicon from 1000 - 1200 ppma to 50 ppma or lower. If the polysilicon charged has an initial hydrogen concentration of about 600 ppma, the concentration can be reduced to a value within the range of 20 to 25 ppma. If the surface dust content of the polysilicon particles charged is about 0.3 weight percent, the above process can reduce the surface dust content to about 0.005 weight percent, or below.

After reduction of the hydrogen and surface dust contents of the particles in the process described above, the particles can be cooled in a product cooler. Generally speaking, the particles are cooled to a temperature in the range of $60°$ to $65°C$ prior to removal of the product to a product hopper. It is to be understood that the process of this invention is not critically dependent on the size or configuration of the fluidized bed reactor(s). For example, the feed silicon particles can be added to reactor 10 in Figure 2 near the bottom of the reactor, and product can be taken off near the top. Moreover, the reactor can be short or tall, and the process adjusted in order to make satisfactory product therein. In this regard, it is preferred to operate in accordance with good fluidized bed processing as appreciated in the art. Stated another way, it is readily apparent to a skilled practitioner that the size of the particles, bed height, bubble size, gas velocity and pressure, and size and configuration of the reactor zone, are important variables but not a part of the essence of the invention disclosed herein. Selection of a matrix of operating conditions by a skilled practitioner within the guidelines discussed herein will achieve good results.

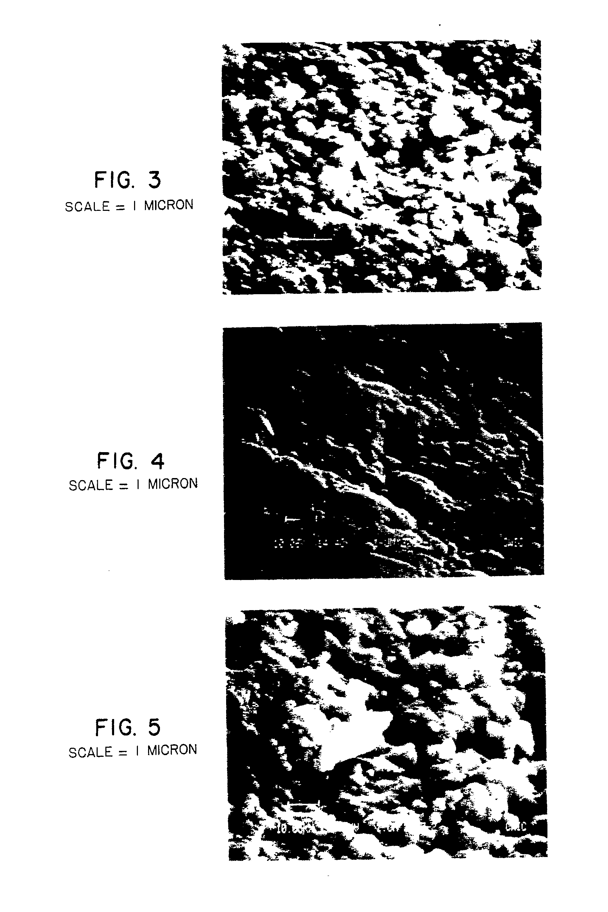

By way of further illustration, photomicrographs of polysilicon particles with and without treatment by the process of this invention are presented in Figures 3, 4, and 5.

Figure 3 is a photomicrograph of a typical polysilicon particle produced by the decomposition of silane in a fluidized bed of polysilicon particles. It is noted that the surface of the particles contains a great deal of dust or loosely bound silicon particles.

In stark comparison to Figure 3, Figure 4 is a photomicrograph of a typical particle of polysilicon produced by the decomposition of silane in a fluidized bed which has been treated by the process of this invention. The surface of such a treated polysilicon particle is essentially smooth and does not contain or exhibit the rough, dusty surface of the untreated particle.

In further contrast, Figure 5 is a photomicrograph of a typical polysilicon particle produced by the decomposition of a halogenated silane. Again, it is noted that the surface of the particle contains a high degree of dust or irregular shaped silicon particles.

As a further illustration of the process of this invention, a mass of polysilicon particles of 700 microns average diameter is fluidized with hydrogen using a hydrogen flow rate for fluidization of $U/U_{min} = 1.5$. The bed temperature is kept at $1100°C$ for an average particle residence time of about 12 hours.

The reactor surfaces exposed to the polysilicon being treated are composed of a non-contaminating substance such as high purity silicon.

The above process will reduce the hydrogen content of polysilicon from a range of 1000 to 1200 ppma to 50 ppma or lower. If the polysilicon charged has an initial hydrogen concentration of about 600 ppma, the concentration will be reduced to a value within the range of 20 to 30 ppma.

After reduction of the hydrogen content of the particles in the process described above, the particles are cooled in a product cooler. Generally speaking, the particles are cooled to a temperature in the range of $60°$ to $65°C$ prior to removal of the product to a product hopper.

By way of the following examples, the process of this invention is illustrated. It is to be understood that this invention is not to be limited by description in the ensuing examples.

Example 1

About 10 kilograms of a silane-derived polysilicon in the form of approximately spherical particles of 600 - 800 microns diameter was charged to a fluidized bed reactor at about $200°C$. The polysilicon had a surface silicon dust content of about 0.071 weight percent. The hydrogen content was within the range of 400 - 700 ppma. The internal diameter of the reactor was about 4.75 inches.

The polysilicon charged to the reactor was fluidized using a helium flow. Hydrogen was introduced to replace the helium gas while the reactor was being heated to about 1000°C. The hydrogen was used to fluidize the bed at a levitation flow of about 183 standard cubic feet per hour (SCFH). Before entering the particle bed, the hydrogen flowed through a distributor to distribute the flow of gas throughout the bed. At 900° to 1000°C, vaporized trichlorosilane was introduced into the particle bed at a rate of about 1 pound per hour.

Product samples were taken after 11 hours and 12 hours of feeding trichlorosilane. The trichlorosilane was continuously fed for 60 hours, and the entire bed removed from the reactor.

Hydrogen analysis of the 12 hour sample, and a sample of the bed after feeding 60 hours indicated hydrogen contents of 21 ppma and 12 ppma, respectively. The surface dust analysis of the 12-hour sample and final-bed sample were 0.003 and 0.005 weight percent, respectively.

Example 2

Twenty pounds of silane-derived polysilicon was charged to a fluidized bed reactor at about 800°C, and maintained in a fluidized bed state using a levitation hydrogen flow of about 183 SCFH. The bed temperature could not be raised above 920°C, so another eight pounds of polysilicon was charged to the reactor to help bring the bed temperature up to 1000°C. Again, the bed temperature did not go up. Therefore, it was decided to continue running the fluidized bed at about 910°C for 8 hours without any trichlorosilane feed. (Later, it was found that there was a faulty thermocouple, hence, the bed temperature may have been higher than 910°C).

Thereafter, fluidized motion was maintained for a period of three hours while maintaining the temperature at 910°C. During this three hour period, the hydrogen flow, prior to admission to the bed, was admixed with from 0.3 to 0.5 mole percent of trichlorosilane (0.3 pounds of trichlorosilane per hour).

Samples were taken after 3 and 6 hours (at the 11th and 14th hour) of trichlorosilane addition to the motive gas. Analysis showed the surface dust of the 3 and 6 hour samples to be 0.004 weight percent, and 0.001 weight percent, respectively. The hydrogen content of these samples was 20 ppma, and 28 ppma, respectively. Microscopic examination of the particles showed a surface layer of 1 and 2 microns respectively.

The following table summarizes the results of the above two examples.

## TABLE

| Example | Sample Time Hrs. | H₂ ppma Old[1] | H₂ ppma New[2] | Dust Wt. % | Chloride, ppba before etch | Chloride, ppba after etch | TCS** feed mol % |
|---|---|---|---|---|---|---|---|
| Initial Charge | | | 1204 | 0.071 / 0.065 | <169 | <48 | --- |
| 1 | 11 | 11 | 40 | 0.003 | 30100 | 3900 | 1 - 1.5 |
| | 12 | 43 | 21 | 0.003 | 33000 | 12900 | 1 - 1.5 |
| | 60 | 10 | 12 | 0.005 | 198000 | 169000 | 1 - 1.5 |
| 2 | 3*** | 12 | 20 | 0.004 | 5600 | 242 | 0.3 - 0.5 |
| | 6*** | 10 | 28 | 0.001 | 10600 | 600 | 0.3 - 0.5 |

1 - Old analysis method - vacuum procedure with gas chromatograph finish

2 - New analysis method - flowing argon procedure with hydrogen gas calibration

* - Chloride in pellets may lower the reported H₂ numbers

** - TCS - Trichlorosilane

*** - After start of TCS feed at 910 C

**Claims**

1. Semiconductor grade polysilicon in bead or bead-like particulate form having a hydrogen content of less than 30 ppma and a surface essentially free of silicon dust, said polysilicon having a center portion of high purity silicon and an outer layer of a dense silicon on the center portion.

2. The polysilicon of Claim 1 having a shiny surface.

3. The polysilicon of Claim 1 or 2 having a surface silicon dust content of less than 0.005 weight percent.

4. The polysilicon of any of the preceding claims wherein the outer layer of dense silicon on the center portion is from 0.1 to 5 microns in thickness and the center portion ranges in average size from 80 microns to 2000 microns.

5. The polysilicon of Claim 4 having a center portion ranging in average size from 600 to 1000 microns.

8

6. A fluidized bed process for reducing the surface silicon dust content and hydrogen content of semiconductor grade polysilicon, comprising the steps of (a) fluidizing in a reaction zone, a bed of semiconductor grade, silane derived polysilicon in bead or bead-like particulate form at a temperature of from 1000° to 1200°C, with a carrier gas admixed with from 0.1 to 5.0 mole percent of a silane compound having the formula $SiH_{4-n}X_n$, wherein n is an integer of 1 to 4, and X is a halogen selected from the group consisting of chlorine, bromine, and iodine, and (b) recovering from the reaction zone a semiconductor grade polysilicon product having a reduced surface silicon dust content and hydrogen content and having an outer layer of dense silicon on a center portion of high purity silicon.

7. The process of Claim 6 where said polysilicon product has a shiny surface.

8. The process of Claim 6 or 7 wherein the carrier gas is hydrogen, the silane compound is trichlorosilane, and the outer layer of dense silicon is from 0.1 to 5 microns in thickness.

9. The process of any of claims 6-8 wherein the polysilicon product has a surface dust content of less than about 0.005 weight percent.

10. The process of any of claims 6-9 wherein the polysilicon product has a surface dust content of less than 0.005 weight percent.

EP 0 450 393 A2

12

13

17

18

13

20

22

23

24

10b

29

10a

21

11

SILICON
DUST

14

25

10

15

$Si\ H_{4-n}\ X_n$

16

26

27

28

FIG. 2

1

12

10

14

FIG. 1

FIG. 3
SCALE = I MICRON

FIG. 4
SCALE = I MICRON

FIG. 5
SCALE = I MICRON